# EUROPEAN PATENT APPLICATION

(11) **EP 2 255 864 A1**
(43) Date of publication of application: **01.12.2010**
(21) Application number: 09161103.8
(22) Date of filing: 26.05.2009
(51) Int. Cl.: B01D 53/00, F25J 3/06, C10L 3/10

(54) **Process for removing gaseous contaminants from a feed stream**

(71) Applicant: Shell Internationale Research Maatschappij B.V., 2596 HR Den Haag (NL)
(72) Inventor: Geers, Henricus Abraham, 2288 GS Rijswijk (NL); Klaver, Theodorus Cornelis, 2288 GS Rijswijk (NL)
(74) Representative: Matthezing, Robert Maarten

(57) **Abstract**

The invention provides a process for removing gaseous contaminants from a feed gas stream which comprises a gaseous product and gaseous contaminants such as carbon dioxide and hydrogen sulphide, the process comprising:
1) providing the feed gas stream;
2) cooling the feed gas stream to a temperature at which liquid phase contaminant is formed as well as a gaseous phase rich in gaseous product;
3) cooling the stream as obtained in step 2) further to a temperature at which a slurry is formed which comprises solid contaminant, liquid phase contaminant and a gaseous phase rich in gaseous product;
4) introducing the stream obtained in step 3) into a gas/liquid/solids separation device; and
5) removing from the gas/liquid/solids separation device a gas stream rich in gaseous product and a stream which comprises solid contaminant and/or liquid phase contaminant.

## Description

The present invention relates to a process for removing gaseous contaminants from a feed stream which comprises a gaseous product and gaseous contaminants.

Gas streams produced from subsurface reservoirs such as natural gas, associated gas and coal bed gas methane, or from (partial) oxidation processes, usually contain in addition to the gaseous product concerned such as methane, hydrogen and/or nitrogen contaminants as carbon dioxide, hydrogen sulphide, carbon oxysulphide, mercaptans, sulphides and aromatic sulphur containing compounds in varying amounts. For most of the applications of these gas streams, the contaminants need to be removed, either partly or almost completely, depending on the specific contaminant and/or the use. Often, the sulphur compounds need to be removed into the ppm level, carbon dioxide sometimes up till ppm level, e.g. LNG applications, or up till 2 or 3 vol. percent, e.g. for use as heating gas. Higher hydrocarbons may be present, which, depending on the use, may be recovered.

Processes for the removal of carbon dioxide and sulphur compounds are know in the art. These processes include absorption processes using e.g. aqueous amine solutions or molecular sieves. These processes are especially suitable for the removal of contaminants, especially carbon dioxide and hydrogen sulphide that are present in relatively low amounts, e.g. up till several vol%.

In WO 2006/087332, a method has been described for removing contaminating gaseous components, such as carbon dioxide and hydrogen sulphide, from a natural gas stream. In this method a contaminated natural gas stream is cooled in a first expander to obtain an expanded gas stream having a temperature and pressure at which the dewpointing conditions of the phases containing a preponderance of contaminating components, such a carbon dioxide and/or hydrogen sulphide are achieved. The expanded gas stream is then supplied to a first segmented centrifugal separator to establish the separation of a contaminants-enriched liquid phase and a contaminants-depleted gaseous phase. The contaminants-depleted gaseous phase is then passed via a recompressor, an interstage cooler, and a second expander into a second centrifugal separator. The interstage cooler which is based on a natural gas loop and the second expander are used to cool the contaminants-depleted gaseous phase to such an extent that again a contaminants-enriched liquid phase and a further contaminates-depleted gaseous phase are obtained which are subsequently separated from each other by means of the second centrifugal separator. In such a method energy recovered from the first expansion step is used in the compression step, and an internal natural gas loop is used in the interstage cooler.

A disadvantage of this known method is that there is still room for improvement in terms of removal of the gaseous contaminants. Moreover, the use of a recompressor, interstage cooler and an expander between the two centrifugal separators affects the energy efficiency of the separation process, which energy efficiency is a measure of the fuel gas consumption and the hydrocarbon loss in the liquid phase contaminant streams during the process.

It has now been found that from a feed stream comprising a gaseous product and gaseous contaminants such as carbon dioxide and hydrogen sulphide can very effectively be removed, when use is made of a particular sequence of cooling steps followed by a cryogenic separation step. Moreover, by using the specific sequence of cooling steps the energy efficiency of the overall processing can be improved.

Accordingly, the present invention provides a process for removing gaseous contaminants from a feed stream which comprises a gaseous product and gaseous contaminants, the process comprising:
1) providing the feed stream;
2) cooling the feed stream to a temperature at which liquid phase contaminant is formed as well as a gaseous phase rich in gaseous product;
3) cooling the stream as obtained in step 2) further to a temperature at which a slurry is formed which comprises solid contaminant, liquid phase contaminant and a gaseous phase rich in gaseous product;
4) introducing the stream obtained in step 3) into a gas/liquid/solids separation device; and
5) removing from the gas/liquid/solids separation device a gas stream rich in gaseous product and a stream which comprises solid contaminant and/or liquid phase contaminant.

The gas stream obtained in accordance with the present process contains very low amounts of contaminants.

Suitably, the feed stream comprises a gaseous phase comprising the gaseous product and gaseous contaminants, and a liquid phase comprising liquid phase contaminant.

Suitably, the gaseous contaminants, solid contaminant and liquid phase contaminant are carbon dioxide and/or hydrogen sulphide.

The stream as obtained in step 2) has preferably a temperature between 1 and 40 °C, more preferably between 2 and 20 °C above the temperature at which carbon dioxide freezes from the feed stream.

Preferably, in step 2) of the present process the feed stream is cooled to a temperature between 5 and -70°C, more preferably between -25 and -50°C, and the pressure of the stream so obtained is preferably between 5 and 90 bara, more preferably between 40 and 60 bara.

Preferably, the cooling in step 2) of the present invention is done by isenthalpic expansion, preferably isenthalpic expansion over an orifice or a valve, especially a Joule-Thomson valve, or by nearly isentropic expansion, especially by means of an expander, preferably a turbo expander or a laval nozzle.

Preferably, in step 3) of the present process the stream is cooled by means of direct contact with a cooling medium, preferably a fluid comprising hydrocarbons.

In step 3) of the present invention the stream is preferably cooled to a temperature which is between 10 and 50°C lower than the temperature to which the feed stream is cooled in step 2).

Preferably, in step 3) of the present process the stream is cooled to a temperature between -50 and -110°C, more preferably between -60 and -105°C, and the pressure of the stream so obtained is preferably between 5 and 40 bara, more preferably between 5 and 30 bara.

In step 3) of the present process the cooling can also suitably be done by means of isobaric cooling, more preferably isobaric cooling using one or more heat exchangers.

Preferably, the feed stream to be provided in step 1) of the present invention has a temperature between -20 and -55 °C, more preferably between -25 and -45 °C, and the pressure of the feed stream is preferably between 30 and 70 bara, more preferably between 40 and 60 bara.

Suitably, the feed stream provided in step 1) of the present process is obtained by cooling a feed gas stream which comprises the gaseous product and gaseous contaminants by means of nearly isentropic expansion, especially by means of an expander, preferably a turbo expander or a laval nozzle.

Preferably, the feed gas stream is cooled to a temperature at which liquid phase contaminant is formed as well as a gaseous phase rich in gaseous product.

In another embodiment of the present invention the feed stream provided in step 1) is obtained by cooling a feed gas stream which comprises the gaseous product and gaseous contaminants in a step a) by means of isenthalpic expansion, preferably isenthalpic expansion over an orifice or a valve, especially a Joule-Thomson valve, or by nearly isentropic expansion, especially by means of an expander, preferably a turbo expander or a laval nozzle,to a first temperature, and cooling the stream so obtained in a step b) to a second temperature which is lower than the first temperature.

Preferably, the feed gas stream is cooled in step b) to a temperature at which liquid phase contaminantis formed as well as a gaseous phase rich in gaseous product.

Preferably, the cooling in step b) is carried out by means of isobaric cooling, preferably isobaric cooling using one or more heat exchangers.

More preferably, in step 3) of the present process the stream is cooled by means of direct contact with a cooling medium, preferably a fluid comprising hydrocarbons.

Suitably, in the embodiment of the present invention as described hereanabove, the first temperature in step a) is between -20 and 15°C, preferably between -10 and 10°C, and the pressure of the stream so obtained is preferably between 30 and 70 bara, more preferably between 40 and 60 bara.

Preferably, the second temperature in step b) is between -20 and -55 °C, more preferably between -25 and - 45 °C, and the pressure of the stream so obtained is preferably between 30 and 70 bara, more preferably 40 and 60 bara.

Suitably, the feed stream to be provided in step 1) of the present process can be derived from a feed gas stream comprising a natural gas and which comprises between 10 and 90 vol% of carbon dioxide, between 0.1 and 60 vol% of hydrogen sulphide, and between 20 and 80 vol% of methane.

Preferably, the feed stream to be provided in step 1) of the present invention is a dehydrated feed stream. In the context of the present invention a "dehydrated feed stream" is defined as a feed stream from which water is removed until the amount of water in the feed stream is less than 20 ppmv, preferably less than 5 ppmv, more preferably less than 1 ppmv.

Preferably, the feed gas stream gas has a pressure between 110-150 bara. More preferably, the feed gas stream is a dehydrated feed gas stream having a pressure between 110-150 bara. Most preferably, the feed gas stream is a dehydrated natural gas having a pressure between 110-150 bara.

As will be clear from the above there exist a number of ways to obtain the liquid phase containing feed stream provided in step 1) from a feed gas stream, for instance, a feed gas stream from a subsurface reservoir.

The present invention also relates to a device (plant) for carrying out the process as described above, as well as the purified gas stream obtained by the present process. In addition, the present invention concerns a process for liquefying a feed gas stream comprising purifying the feed gas stream by means of the present process, followed by liquefying the purified feed gas stream by methods known in the art.

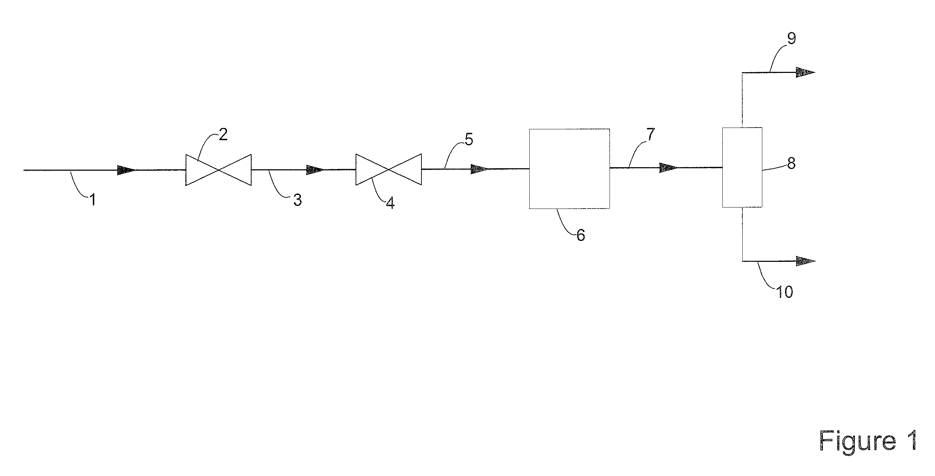

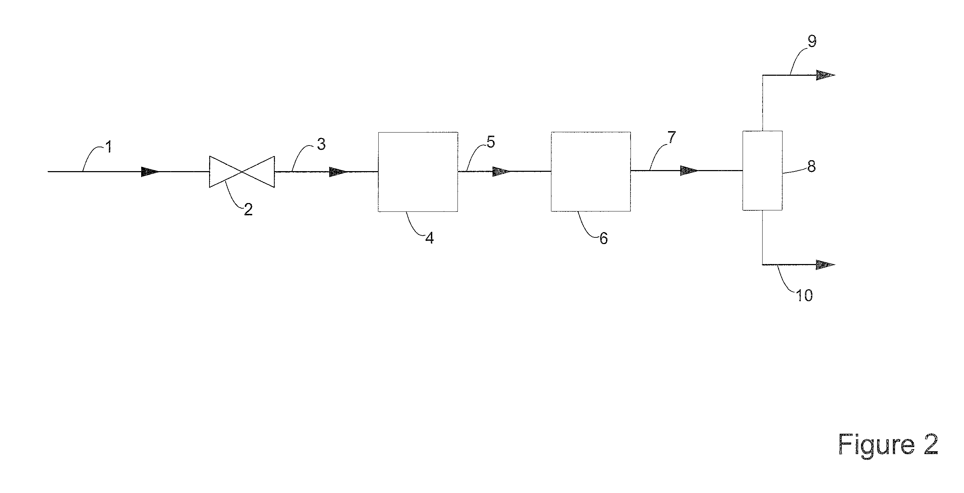

The invention will be further illustrated by means of Figures 1 and 2.

In Figure 1, a dehydrated natural gas having a temperature of 40 °C and a pressure of 146 bara is passed via a conduit 1 through a turbo expander 2, wherein nearly isentropic expansion is applied, whereby a stream is obtained comprising liquid phase comprising as liquid phase contaminants carbon dioxide and hydrogen sulphide and a gaseous phase comprising as gaseous contaminants carbon dioxide and hydrogen sulphide. The stream so obtained has a temperature of -30 °C and a pressure of 52 bara. Subsequently, the stream so obtained is passed via a conduit 3 to a valve 4, wherein isenthalpic expansion is applied, whereby a stream is obtained having a temperature of -64 °C and a pressure of 25 bara. The stream so obtained is then introduced via conduit 5 into a device 6 wherein the stream is cooled by means of direct contact with a cooling medium, preferably a fluid comprising hydrocarbons, to obtain a slurry having a temparture of -80 °C and a pressure of 25 bara. The slurry comprises solid carbon dioxide and hydrogen sulphide contaminants, liquid phase contaminant in the form of carbon dioxide and hydrogen sulphide, and a gaseous phase rich in methane. Subsequently, the slurry as introduced via a conduit 7 into a gas/liquid/solids separation device 8 from which a gaseous product rich in methane is removed via outlet means 9 and a stream comprising solid and/or liquid comprising carbon dioxide and hydrogen sulphide is removed via an outlet means 10.

In Figure 2, a dehydrated natural gas having a temperature of 40 °C and a pressure of 146 bara is passed via a conduit 1 through a valve 2, wherein isenthalpic expansion is applied, whereby a stream is obtained having a temperature of 2 °C and a pressure of 52 bara. Subsequently, the stream so obtained is passed via a conduit 3 to a heat exchanger 4 wherein the stream is subjected to an isobaric cooling step to obtain a stream having a temperature of -30 °C and a pressure of 52 bara. Said stream comprises a liquid phase comprising as liquid phase contaminants carbon dioxide and hydrogen sulphide and a gaseous phase which comprises as gaseous contaminants carbon dioxide and hydrogen sulphide. The stream so obtained is then introduced via conduit 5 into a device 6 wherein the stream is cooled by means of direct contact with a cooling medium, preferably a fluid comprising hydrocarbons, to obtain a slurry having a temparture of - 80 °C and a pressure of 25 bara. The slurry comprises solid carbon dioxide and hydrogen sulphide contaminants, liquid phase contaminant in the form of carbon dioxide and hydrogen sulphide, and a gaseous phase rich in methane. Subsequently, the slurry as introduced via a conduit 7 into a gas/liquid/solids separation device 8from which a gaseous product rich in methane is removed via outlet means 9 and a stream comprising solid and/or liquid comprising carbon dioxide and hydrogen sulphide is removed via an outlet means 10.

## Claims

1. A process for removing gaseous contaminants from a feed stream which comprises a gaseous product and gaseous contaminants, the process comprising:
1) providing the feed stream;
2) cooling the feed stream to a temperature at which liquid phase contaminant is formed as well as a gaseous phase rich in gaseous product;
3) cooling the stream as obtained in step 2) further to a temperature at which a slurry is formed which comprises solid contaminant, liquid phase contaminant and a gaseous phase rich in gaseous product;
4) introducing the stream obtained in step 3) into a gas/liquid/solids separation device; and
5) removing from the gas/liquid/solids separation device a gas stream rich in gaseous product and a stream which comprises solid contaminant and/or liquid phase contaminant.

2. A process according to claim 1, in which the feed stream comprises a gaseous phase comprising the gaseous product and gaseous contaminants, and a liquid phase comprising liquid phase contaminant.

3. A process according to claim 1 or 2, in which the gaseous contaminants, solid contaminant and liquid phase contaminant are carbon dioxide and/or hydrogen sulphide.

4. A process according to any one of claims 1-3, in which in step 3) the stream is cooled by means of direct contact with a cooling medium, preferably a fluid comprising hydrocarbons.

5. A process according to any one of claims 1-5, in which in step 2) the feed stream is cooled to a temperature between 5 and -70°C, preferably between -25 and -50°C, and the pressure of the stream so obtained is between 5 and 90 bara, preferably between 40 and 60 bara.

6. A process according to any one of claims 1-5, in which the cooling in step 2) is done by isenthalpic expansion, preferably isenthalpic expansion over an orifice or a valve, especially a Joule-Thomson valve, or by nearly isentropic expansion, especially by means of an expander, preferably a turbo expander or a laval nozzle.

7. A process according to any one of claims 1-6, in which in step 3) the stream is cooled to a temperature between - 50 and -110°C, preferably between -60 and -105°C, and the pressure of the stream so obtained is between 5 and 40 bara, preferably between 5 and 30 bara.

8. A process according to any one of claims 1-7, in which in step 3) the stream is cooled to a temperature which is between 10 and 50°C lower than the temperature to which the feed stream is cooled in step 2).

9. A process according to any one of claims 1-8, in which in step 3) the cooling is done by means of isobaric cooling, preferably isobaric cooling using one or more heat exchangers.

10. A process according to any one of claims 1-9, in which the feed stream provided in step 1) is obtained by cooling a feed gas stream which comprises the gaseous product and gaseous contaminants by means of nearly isentropic expansion, especially by means of an expander, preferably a turbo expander or a laval nozzle.

11. A process according to claim 10, in which the feed gas stream is cooled to a temperature at which liquid phase contaminant is formed as well as a gaseous phase rich in gaseous product.

12. A process according to any one of claims 1-11, in which the feed stream provided in step 1) is obtained by cooling a feed gas stream which comprises the gaseous product and gaseous contaminants in a step a) by means of isenthalpic expansion, preferably isenthalpic expansion over an orifice or a valve, especially a Joule-Thomson valve, or by nearly isentropic expansion, especially by means of an expander, preferably a turbo expander or a laval nozzle, to a first temperature, and cooling the stream so obtained in a step b) to a second temperature which is lower than the first temperature.

13. A process according to claim 12, in which the feed gas stream is cooled in step b) to a temperature at which liquid phase contaminant is formed as well as a gaseous phase rich in gaseous product.

14. A process according to claim 12 or 13, in which the cooling in step b) is carried out by means of isobaric cooling, preferably isobaric cooling using one or more heat exchangers, and more preferably isobaric cooling using direct contact with a cooling medium.

15. A process according to any one of claims 12-14, in which the first temperature in step a) is between -20 and 15°C, preferably between -10 and 10°C, and the pressure of the stream so obtained is between 30 and 70 bara, preferably between 40 and 60 bara.

16. A process according to any one of claims 10-15, in which the feed gas stream is a natural gas and comprises between 10 and 90 vol% of carbon dioxide, between 0.1 and 60 vol% of hydrogen sulphide, and between 20 and 80 vol% of methane.

17. Purified feed gas stream obtained by a process according to any one of claims 1-16.

18. A process for liquefying a feed gas stream comprising purifying the feed gas stream according to any one of claims 1-17, followed by liquefying the purified fee gas stream by methods known in the art.
